# EUROPÄISCHE PATENTSCHRIFT

(11) **EP 2 575 029 B1**
(45) Veröffentlichungstag und Bekanntmachung des Hinweises auf die Patenterteilung: **30.01.2019**
(21) Anmeldenummer: 12185863.3
(22) Anmeldetag: 25.09.2012
(51) Int. Cl.: G06F 3/12

(54) **Druckverfahren, Anordnung zur Realisierung des Druckverfahrens sowie ein entsprechendes Computerprogramm und ein entsprechendes computerlesbares Speichermedium**
Printing method, arrangement for realising the printing method and a corresponding computer program and a corresponding computer readable storage medium
Procédé d'impression, agencement de réalisation du procédé d'impression, programme informatique correspondant et support de stockage correspondant lisible sur ordinateur

(30) Priorität: 28.09.2011 DE 102011054020
(43) Veröffentlichungstag der Anmeldung: 03.04.2013
(73) Patentinhaber: Cortado AG, 10559 Berlin (DE)
(72) Erfinder: Mickeleit, Carsten, 12205 Berlin (DE)
(74) Vertreter: Gulde & Partner

(56) Entgegenhaltungen:
- EP-A2- 1 471 418
- EP-A2- 2 365 431
- WO-A1-2010/092161
- GB-A- 2 332 764
- US-A1- 2005 086 282

## Beschreibung

Die Erfindung betrifft ein Druckverfahren, eine Anordnung zur Realisierung des Druckverfahrens sowie ein entsprechendes Computerprogramm und ein entsprechendes computerlesbares Speichermedium, welche es insbesondere ermöglichen, von einem Desktop-Rechner oder Laptop unabhängig von einer druckerspezifischen Treiberinstallation und Druckerkonfiguration auf dem Rechner über W-LAN (Wireless Local Area Network) oder Bluetooth® zu drucken.

Bei herkömmlichen Lösungen im Bereich der Erfindung kommt es beispielsweise zu Schwierigkeiten, wenn ein Nutzer eines Computers in einer Umgebung drucken will, in der er zwar Zugang zu Druckern hat, auf dem Computer jedoch kein Treiber installiert ist, der einem Drucker in der lokalen Umgebung des Computers entspricht.

Auf dem Gebiet der Erfindung ist aus der Druckschrift GB 2 332 764 A eine Lösung bekannt, bei welcher ein Client bei einem Druckservice nach unterstützten Druckern anfragt, einen der unterstützten Drucker für einen Ausdruck auswählt, einen auszudruckenden Inhalt in ein geräteunabhängiges Format wandelt und den gewandelten Inhalt zusammen mit Angaben über den ausgewählten Drucker an den Druckservice übermittelt. Der Druckservice rendert den Inhalt unter Verwendung eines druckgerätespezifischen Treibers und übermittelt den gerenderten Inhalt an den ausgewählten Drucker.

Aus der Veröffentlichung EP 1 471 418 A2 ist eine Lösung bekannt, bei der von einem PDA eine auszudruckende Datei zusammen mit Angaben über einen zu verwendenden Drucker an einen Druckserver übermittelt wird, wo die Datei mit einem gerätespezifischen Treiber gerendert und über den PDA an den Drucker gesendet wird.

Aus der Veröffentlichung EP 2 365 431 A2 sind Systeme und Verfahren zum Auffinden von Druckgeräten bekannt. Gemäß der in der Veröffentlichung EP 2 365 431 A2 beschriebenen Lösung werden durch ein in einer Internetseite enthaltenes Modul Druckgeräte ermittelt und die Druckcharakteristik dieser Drucker zusammen mit einem auszudruckenden Inhalt zu einem Druckserver übertragen, der den Inhalt rendert und an einen Drucker überträgt.

In der Veröffentlichung US 2005/086282 A1 wird ein Verfahren für mobiles Drucken beschrieben. Gemäß dieser Lösung wird ein Druckservice im Internet bereitgestellt, mit welchem sich ein mobiles Endgerät verbinden kann. Nach Herstellung der Verbindung werden dem mobilen Endgerät von dem Druckservice Drucker angeboten, die sich in der Nähe des mobilen Endgeräts befinden, und es wird dem mobilen Endgerät ein generischer Druckertreiber übersendet. Anschließend wird unter Verwendung des generischen Druckertreibers ein Druckprozess gestartet.

In der Veröffentlichung WO 2010/092161 A1 wird ein Verfahren für mobiles Drucken beschrieben, bei dem vorgängig auf einem Server installierte Druckertreiber mit den drahtlos vom mobilen Endgerät erreichbaren Druckern abgeglichen werden, bevor das auszudruckende Dokument vom Endgerät an den Server zur Generierung der Druckdaten übermittelt wird.

Die Aufgabe der Erfindung besteht somit darin, ein Druckverfahren, eine Anordnung zur Realisierung des Druckverfahrens sowie ein entsprechendes Computerprogramm und ein entsprechendes computerlesbares Speichermedium bereitzustellen, welche die Nachteile der bekannten Lösungen beheben sowie insbesondere die Nutzung von Druckern zu ermöglichen, ohne selbst über entsprechende Druckertreiber zu verfügen.

Diese Aufgabe wird erfindungsgemäß durch die Merkmale in den Ansprüchen 1 und 10 bis 12 gelöst. Zweckmäßige Ausgestaltungen der Erfindung sind in den Unteransprüchen enthalten.

Ein besonderer Vorteil der vorliegenden Erfindung besteht darin, dass die Anzahl der Drucker vergrößert wird, auf denen von einer Datenverarbeitungseinrichtung aus gedruckt werden kann. Das wird dadurch erreicht, dass erfindungsgemäß auf einer ersten Datenverarbeitungseinrichtung, die vorzugsweise eine mobile Datenverarbeitungseinrichtung ist, ein Druckertreiber gespeichert ist, der z.B. bei seiner Installation auf der ersten Datenverarbeitungseinrichtung ein Druckerobjekt mit zugehörigem Ausgabe-Port erzeugt. Der Druckertreiber ist in dem Sinne ein generischer Druckertreiber, als er auszudruckende Daten in ein druckgeräteunabhängiges Format wandelt. Wenn Daten, beispielsweise Inhalte, ausgedruckt werden sollen, sieht das erfindungsgemäße Verfahren vor, dass hierzu das erfindungsgemäße Druckerobjekt genutzt wird. Unter Inhalten werden im Folgenden Dateien und Daten verstanden, die sich unter Verwendung von Anwendungsprogrammen visualisieren und ausdrucken lassen. Das erfindungsgemäße Druckerobjekt kann beispielsweise wie jedes herkömmliche Druckerobjekt in das Drucksystem der ersten Datenverarbeitungseinrichtung integriert sein und einem Nutzer in einem Druckmenü angeboten werden, wobei das Druckmenü ganz herkömmlich durch Betätigung einer Druckfunktion oder eines Druckbuttons aus einer Anwendung heraus geöffnet werden kann.

Wenn ein Nutzer, beispielsweise aus einer Anwendung heraus unter Nutzung der durch die Anwendung herkömmlicherweise bereitgestellten Druckfunktion, einen Ausdruck eines Inhalts startet, wird über den erfindungsgemäßen Ausgabe-Port eine Verbindung zu einer zweiten Datenverarbeitungseinrichtung hergestellt. Bei der zweiten Datenverarbeitungseinrichtung kann es sich um einen Druckserver oder um einen Server eines Dienstleistungsanbieters handeln. Von der zweiten Datenverarbeitungseinrichtung werden der ersten Datenverarbeitungseinrichtung Informationen zur Verfügung gestellt über Drucker, die durch einen Druckserver unterstützt werden, der Druckserver kann dabei die zweite Datenverarbeitungseinrichtung selbst sein oder eine dritte Datenverarbeitungseinrichtung. Die Informationen umfassen in einer bevorzugten Ausführungsform zumindest Informationen über Drucker, wie Druckertypen oder Druckernamen, und/oder Informationen über Druckertreiber. Die Informationen können der ersten Datenverarbeitungseinrichtung über Push- oder Pull-Technologie bereitgestellt werden.

Von der ersten Datenverarbeitungseinrichtung werden außerdem Drucker ermittelt, die über eine drahtlose Schnittstelle der ersten Datenverarbeitungseinrichtung erreichbar sind. Diese Ermittlung kann vor oder nach dem Auslösen des Ausdrucks erfolgen.

In einer bevorzugten Ausführungsform ist vorgesehen, dass dem Nutzer sowohl die durch den Druckserver unterstützten Drucker als auch die über die drahtlose Schnittstelle erreichbaren Drucker angeboten werden. Das kann beispielsweise über ein Auswahlmenü auf einer grafischen Benutzeroberfläche der ersten Datenverarbeitungseinrichtung erfolgen. Aus diesen Druckern wählt der Nutzer einen Drucker aus, der sowohl drahtlos mit der ersten Datenverarbeitungseinrichtung verbindbar ist als auch von dem Druckserver durch einen entsprechenden Druckertreiber unterstützt wird.

Eine bevorzugte Ausführungsform sieht vor, dass der Abgleich von erreichbaren und unterstützten Druckern automatisch durch die erste Datenverarbeitungseinrichtung erfolgt, in dessen Ergebnis dem Nutzer eine Liste von nutzbaren Drucker angeboten wird, die zumindest einen Teil der Schnittmenge der erreichbaren und unterstützten Drucker darstellt.

Durch den generischen Druckertreiber, der auf der ersten Datenverarbeitungseinrichtung installiert ist, werden die auszudruckenden Daten in ein druckgeräteunabhängiges Format gewandelt. Nachdem der Nutzer einen für den Ausdruck bestimmten Drucker gewählt hat, werden die in das druckgeräteunabhängige Format gewandelten Daten und Informationen über den gewählten Drucker über den Ausgabe-Port an die zweite oder - nicht beanspruchte - dritte Datenverarbeitungseinrichtung übertragen. Dabei ist in einer bevorzugten Ausführungsform vorgesehen, dass die Daten und Informationen an die zweite Datenverarbeitungseinrichtung übertragen werden, wenn die zweite Datenverarbeitungseinrichtung einen Druckserver umfasst. Eine nicht beanspruchte Übertragung an die dritte Datenverarbeitungseinrichtung, die dann einen Druckserver umfasst, kann vorgesehen sein, wenn es sich bei der zweiten Datenverarbeitungseinrichtung etwa um einen Server eines Dienstleistungsanbieters ohne Druckserver handelt. Die Daten und Informationen können auch über den Server eines Dienstleistungsanbieters an die dritte Datenverarbeitungseinrichtung gesendet werden.

Der Druckserver ermittelt automatisch aus den Informationen über den gewählten Drucker den entsprechenden Druckertreiber, rendert die auszudruckenden Daten in ein auf den gewählten Drucker abgestimmtes, druckgerätespezifisches Format und sendet die gerenderten Daten über die erste Datenverarbeitungseinrichtung an den gewählten Drucker.

Die Erfindung stellt somit ein Verfahren bereit, bei dem ein Inhalt, der von einem Nutzer ausgedruckt werden soll, auf der ersten Datenverarbeitungseinrichtung in ein vorgegebenes Format gewandelt wird. Dies vorgegebene Format ist so ausgelegt, dass dieses Format von einer zweiten Datenverarbeitungseinrichtung entgegengenommen und weiterverarbeitet werden kann. Es handelt sich bei dem vorgegebenen Format vorzugsweise um ein Zwischen- oder um ein generisches Format. Bei dem vorgegebenen Format kann es sich beispielsweise um ein Textformat wie das Microsoft® Word-Format, ein pdf-Format (pdf = Portable Document Format), um das geräteunabhängige EMF-Format (EMF = Windows Enhanced Metafile) o.dgl. handeln.

Der in dieses vorgegebene geräteunabhängige Format gewandelte Inhalt wird anschließend zusammen mit Angaben über einen oder mehrere Drucker, auf denen der Inhalt ausgedruckt werden soll, an die zweite Datenverarbeitungseinrichtung übertragen. Diese zweite Datenverarbeitungseinrichtung kann als Druckserver ausgestaltet sein. Die zweite Datenverarbeitungseinrichtung kann in einem LAN oder in einer sogenannten Cloud angeordnet sein. Im ersten Fall erfolgt die Kommunikation zwischen der ersten und zweiten Datenverarbeitungseinrichtung auf Basis eines der bekannten Kommunikationsprotokolle für LAN, im zweiten Fall über ein Protokoll für die Kommunikation im Internet.

Erfindungsgemäß ist vorgesehen, dass der mindestens eine Drucker, auf dem ausgedruckt werden soll, durch die erste Datenverarbeitungseinrichtung ermittelt wird. Vorzugsweise werden durch die erste Datenverarbeitungseinrichtung Drucker ermittelt, die über eine drahtlose Schnittstelle erreichbar sind. Das können Drucker mit einer Bluetooth®-Schnittstelle sein oder Drucker in einem LAN (Local Area Network), wobei das LAN einen drahtlosen Access Point, z.B. einen W-LAN-Zugang aufweist.

Es ist weiter vorgesehen, dass die zweite Datenverarbeitungseinrichtung dem Nutzer auf der ersten Datenverarbeitungseinrichtung eine Liste von durch die zweite Datenverarbeitungseinrichtung unterstützten gerätespezifischen Druckertreiber übermittelt. Diese Liste wird mit den von der ersten Datenverarbeitungseinrichtung ermittelten Druckern abgeglichen, so dass im Ergebnis dieses Abgleichs eine Liste von nutzbaren Druckern erstellt wird. Dabei werden unter nutzbaren Druckern solche Drucker verstanden, die von der ersten Datenverarbeitungseinrichtung über eine drahtlose Kommunikationsverbindung erreichbar sind und für die die entsprechenden Druckertreiber durch die zweite Datenverarbeitungseinrichtung bereitgestellt werden. Für einen Durchschnittsfachmann ist klar, dass ein Drucker über eine drahtlose Kommunikationsverbindung erreichbar ist, wenn der Drucker selbst über eine drahtlose Schnittstelle aufweist oder wenn er in einem drahtgebundenen Netzwerk angeordnet ist und das Netzwerk einen drahtlosen Zugangspunkt (Access Point) bereitstellt.

Es kann dabei vorgesehen sein, dass auf der ersten Datenverarbeitungseinrichtung eine Liste von Druckern vorhanden ist, die von der ersten Datenverarbeitungseinrichtung aus einer früheren eigenen Suche nach Druckern in der Umgebung der ersten Datenverarbeitungseinrichtung und/oder aus früher von der zweiten

Datenverarbeitungseinrichtung mitgeteilten Druckern resultiert. Vorzugsweise aber wird der ersten von der zweiten Datenverarbeitungseinrichtung vor jedem Ausdruck mitgeteilt, welche Druckertreiber von der zweiten Datenverarbeitungseinrichtung unterstützt werden. Diese Mitteilung kann automatisch durch die zweite Datenverarbeitungseinrichtung erfolgen oder nur auf eine Anfrage von Seiten der ersten Datenverarbeitungseinrichtung hin.

Die Reihenfolge, in der die Ermittlung des (der) Drucker(s), auf dem (denen) der Ausdruck erfolgen soll, und die Übermittlung der Liste der unterstützten Druckertreiber von der zweiten an die erste Datenverarbeitungseinrichtung ist frei wählbar. Sie ist in dem erfindungsgemäßen Verfahren so vorgesehen, dass im Ergebnis dieser beiden Schritte die nutzbaren Drucker ermittelt werden können.

Aus der Liste der nutzbaren Drucker wählt der Nutzer mindestens einen Drucker aus, auf dem der Inhalt ausgedruckt werden soll. Informationen zu diesen Druckern, wie beispielsweise der Name des zugehörigen gerätespezifischen Treibers, Druckermodell, Druckertyp o.dgl., werden zusammen mit dem in das vorgegebene Format gewandelten Inhalt an die zweite Datenverarbeitungseinrichtung übertragen. Auf der zweiten Datenverarbeitungseinrichtung werden die Informationen über den mindestens einen Drucker, auf dem gedruckt werden soll, extrahiert und der Inhalt mit Hilfe des mindestens einen zu dem mindestens einen ausgewählten Drucker gehörigen gerätespezifischen Druckertreibers gerendert. Zur Kommunikation mit der ersten Datenverarbeitungseinrichtung und zum Extrahieren der Informationen über den mindestens einen ausgewählten Drucker ist auf der zweiten Datenverarbeitungseinrichtung mindestens ein Softwaremodul installiert. Das Rendern kann auf der zweiten Datenverarbeitungseinrichtung oder - nicht beansprucht - auf einer dritten Datenverarbeitungseinrichtung erfolgen.

Die gerenderten Daten werden an die erste Datenverarbeitungseinrichtung übertragen. Die erste Datenverarbeitungseinrichtung leitet die gerenderten Druckdaten über eine drahtlose Kommunikationsverbindung an den mindestens einen ausgewählten Drucker weiter, wo der Inhalt ausgedruckt wird. In einer alternativen Ausführungsform werden die gerenderten Druckdaten von der zweiten Datenverarbeitungseinrichtung an einen Netzwerkdrucker übertragen.

In einer bevorzugten Ausführungsform der Erfindung ist vorgesehen, dass auf der ersten Datenverarbeitungseinrichtung ein Druckerobjekt angelegt wird, welches beim Aufruf zumindest die Wandlung des Inhalts in das vorgegebene, geräteunabhängige Format, das Hinzufügen der Angaben über den mindestens einen ausgewählten Drucker, wo der Inhalt ausgedruckt werden soll, zu dem gewandelten Inhalt und die Übermittlung dieser Daten an einen auf der ersten Datenverarbeitungseinrichtung eingerichteten Druckerport durchführt.

Als vorteilhaft erweist es sich, wenn das erfindungsgemäße Druckverfahren durch Aufruf einer Druckfunktion gestartet wird. Besonders vorteilhaft ist, wenn diese Druckfunktion ganz herkömmlich aus einer Anwendung, wie beispielsweise Microsoft® Word, Excel o.dgl., heraus aufgerufen wird. Eine bevorzugte Ausführungsform sieht dabei vor, dass das erfindungsgemäße Druckerobjekt in einem Druckmenü der Druckfunktion neben herkömmlichen Druckerobjekten erscheint. Das erfindungsgemäße Druckerobjekt wird von der Druckfunktion wie jeder andere auf der ersten Datenverarbeitungseinrichtung eingerichteter Drucker behandelt. Dem erfindungsgemäßen Druckerobjekt ein Treiber zugeordnet, der den auszudruckenden Inhalt in das vorgegeben Format wandelt.

Eine Anordnung nach der Erfindung weist mindestens einen Chip und/oder Prozessor auf und ist derart eingerichtet, dass ein Druckverfahren ausführbar ist, wobei auf einer ersten Datenverarbeitungseinrichtung ein auszudruckender Inhalt in mindestens ein vorgegebenes geräteunabhängiges Format gewandelt wird, durch die erste Datenverarbeitungseinrichtung der in das vorgegebene geräteunabhängige Format gewandelte Inhalt und Informationen über mindestens einen Drucker, auf dem der Inhalt gedruckt werden soll, an eine zweite Datenverarbeitungseinrichtung übermittelt werden, die zweite Datenverarbeitungseinrichtung ein Rendern des Inhalts veranlasst und die durch das Rendern erzeugten Daten an mindestens einen der Drucker übermittelt werden. Die Anordnung umfasst zumindest eine erste und eine zweite Datenverarbeitungseinrichtung.

Bei einer beispielhaften Anordnung ist vorgesehen, dass auf der ersten Datenverarbeitungseinrichtung mindestens ein Druckertreiber gespeichert, der geeignet ist, ein Druckerobjekt mit zugehörigem Ausgabe-Port zu erzeugen. Durch die erste Datenverarbeitungseinrichtung werden Drucker ermittelt, die von der ersten Datenverarbeitungseinrichtung über eine drahtlose Schnittstelle kommunikativ verbindbar sind, und es wird bei Auslösen unter Verwendung des Druckerobjekts eines Ausdrucks von Inhalten zumindest folgendes ausgeführt:
- Herstellen einer Verbindung über den Ausgabe-Port mit einer zweiten Datenverarbeitungseinrichtung und Übertragen von Informationen zumindest über durch die zweite oder eine dritte Datenverarbeitungseinrichtung unterstützte Drucker, an die erste Datenverarbeitungseinrichtung,
- Auswählen mindestens eines Druckers, der von der zweiten oder dritten Datenverarbeitungseinrichtung unterstützt wird,
- durch den Druckertreiber Wandeln des auszudruckenden Inhalts in mindestens ein geräteunabhängiges Format,
- Übertragen des in einem geräteunabhängigen Format vorliegenden Inhalts und von Informationen über den ausgewählten Drucker über den Ausgabe-Port an die zweite Datenverarbeitungseinrichtung,
- Rendern des Inhalts auf der zweiten oder einer dritten Datenverarbeitungseinrichtung und
- Übertragen der durch das Rendern erzeugten Daten an mindestens einen der ausgewählten Drucker.

Vorzugsweise weist die erste Datenverarbeitungseinrichtung Mittel auf, die eine Wandlung des auszudruckenden Inhalts in das vorgegebene geräteunabhängige Format vornehmen. In einer bevorzugten Ausführungsform sind auf der ersten Datenverarbeitungseinrichtung Mittel vorgesehen zum Ermitteln von Druckern, die von der ersten Datenverarbeitungseinrichtung aus über eine drahtlose Kommunikationsverbindung erreichbar sind. In einer weiteren bevorzugten Ausführungsform sind auf der ersten Datenverarbeitungseinrichtung Mittel vorgesehen, die geeignet sind, um eine Verbindung über den Ausgabe-Port mit der zweiten Datenverarbeitungseinrichtung herzustellen und um Informationen zumindest über durch die zweite oder - nicht beansprucht - eine dritte Datenverarbeitungseinrichtung unterstützte Drucker, an die erste Datenverarbeitungseinrichtung zu übertragen. Eine andere bevorzugte Ausführungsform sieht auf der ersten Datenverarbeitungseinrichtung Mittel vor, die es ermöglichen, mindestens einen Drucker auszuwählen, der von der zweiten Datenverarbeitungseinrichtung unterstützt wird oder - nicht beansprucht - von der dritten Datenverarbeitungseinrichtung. In einer anderen bevorzugten Ausführungsform sind auf der ersten Datenverarbeitungseinrichtung Mittel vorgesehen, die Angaben über den mindestens einen ausgewählten Drucker, auf dem der Inhalt ausgedruckt werden soll, dem in das vorgegebene geräteunabhängige Format gewandelten Inhalt hinzufügen. Weiter sind in einer anderen bevorzugten Ausführungsform auf der ersten Datenverarbeitungseinrichtung Mittel vorgesehen, die den in das vorgegebene geräteunabhängige Format gewandelten Inhalt, ggf. zusammen mit den Angaben über den mindestens einen ausgewählten Drucker, an den Ausgabe-Port der ersten Datenverarbeitungseinrichtung senden. Es erweist sich weiter als vorteilhaft, wenn die erste Datenverarbeitungseinrichtung mindestens eine drahtlose Schnittstelle aufweist. Bei der drahtlosen Schnittstelle kann es sich beispielsweise um eine Bluetooth®-Schnittstelle, eine W-LAN-Schnittstelle o.dgl. handeln.

Zur Kommunikation mit der ersten Datenverarbeitungseinrichtung ist auf der zweiten Datenverarbeitungseinrichtung ein Kommunikationsmodul installiert. Dieses Kommunikationsmodul empfängt den in das vorgegebene geräteunabhängige Format gewandelten Inhalt und die Angaben zu dem Drucker, auf dem ausgedruckt werden soll und sendet die gerenderten Daten und die Liste der unterstützte Druckertreiber an die erste Datenverarbeitungseinrichtung.

In einer bevorzugten Ausführungsform ist auf der zweiten Datenverarbeitungseinrichtung eine Anzahl von Druckertreibern für installierte Drucker gespeichert. Angaben über diese Druckertreiber werden in der erwähnten Liste über unterstützte Druckertreiber an die erste Datenverarbeitungseinrichtung übermittelt.

Eine bevorzugte Ausführungsform der Erfindung sieht vor, dass auf der zweiten Datenverarbeitungseinrichtung Mittel vorhanden sind, welche die von der ersten Datenverarbeitungseinrichtung empfangenen Daten (gewandelter Inhalt und Angaben zu dem mindestens einen Drucker) lesen und die aus den Daten die Angaben zu dem mindestens einen Drucker extrahieren. Gemäß einer weiteren bevorzugten Ausführungsform der Erfindung umfasst die zweite Datenverarbeitungseinrichtung Mittel, die nach Auswertung der Angaben zu dem mindestens einen Drucker den auszudruckenden Inhalt mit Hilfe mindestens eines gerätespezifischen Druckertreibers rendern. Damit liegen Druckdaten vor, die von dem mindestens einen ausgewählten Drucker verarbeitet werden können.

Vorzugsweise erfolgt das Rendern durch einen Druckserver. Der Druckserver kann Teil der zweiten Datenverarbeitungseinrichtung oder - nicht beansprucht - auch einer dritten Datenverarbeitungseinrichtung sein.

Ein erfindungsgemäßes Computerprogramm ermöglicht es, nachdem es in Speichermittel des Datenverarbeitungssystems geladen worden ist, ein Druckverfahren durchzuführen, wobei auf einer ersten Datenverarbeitungseinrichtung ein auszudruckender Inhalt in mindestens ein vorgegebenes geräteunabhängiges Format gewandelt wird, durch die erste Datenverarbeitungseinrichtung der in das vorgegebene geräteunabhängige Format gewandelte Inhalt und Informationen über mindestens einen Drucker, auf dem der Inhalt gedruckt werden soll, an eine zweite Datenverarbeitungseinrichtung übermittelt werden, die zweite Datenverarbeitungseinrichtung ein Rendern des Inhalts veranlasst und die durch das Rendern erzeugten Daten an mindestens einen der Drucker übermittelt werden.

In einer bevorzugten Ausführungsform umfasst das Computerprogramm mindestens einen Druckertreiber, der geeignet ist, ein Druckerobjekt mit zugehörigem Ausgabe-Port zu erzeugen, und es ermöglicht dem Datenverarbeitungssystem, die Ausführung eines Druckverfahrens, wobei durch die erste Datenverarbeitungseinrichtung Drucker ermittelt werden, die von der ersten Datenverarbeitungseinrichtung über eine drahtlose Schnittstelle kommunikativ verbindbar sind, und wobei bei Auslösen unter Verwendung des Druckerobjekts eines Ausdrucks von Inhalten zumindest folgendes ausgeführt wird:
- Herstellen einer Verbindung über den Ausgabe-Port mit einer zweiten Datenverarbeitungseinrichtung und Übertragen von Informationen zumindest über durch die zweite oder - nicht beansprucht - eine dritte Datenverarbeitungseinrichtung unterstützte Drucker, an die erste Datenverarbeitungseinrichtung,
- Auswählen mindestens eines Druckers, der von der zweiten oder - nicht beansprucht - dritten

Datenverarbeitungseinrichtung unterstützt wird,
- durch den Druckertreiber Wandeln des auszudruckenden Inhalts in mindestens ein geräteunabhängiges Format,
- Übertragen des in einem geräteunabhängigen Format vorliegenden Inhalts und von Informationen über den ausgewählten Drucker über den Ausgabe-Port an die zweite Datenverarbeitungseinrichtung,
- Rendern des Inhalts auf der zweiten oder - nicht beansprucht - einer dritten Datenverarbeitungseinrichtung und
- Übertragen der durch das Rendern erzeugten Daten an mindestens einen der ausgewählten Drucker.

In einer weiteren bevorzugten Ausführungsform der Erfindung ist vorgesehen, dass das erfindungsgemäße Computerprogramm modular aufgebaut ist, wobei einzelne Module auf verschiedenen Teilen des Datenverarbeitungssystems installiert sind.

Vorteilhafte Ausführungsformen sehen zusätzlich Computerprogramme vor, durch welche weitere in der Beschreibung angegebene Verfahrensschritte oder Verfahrensabläufe ausgeführt werden können.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 9 aus einem elektronischen Datennetz, wie beispielsweise aus dem Internet, auf eine an das Datennetz angeschlossene Datenverarbeitungseinrichtung heruntergeladen wird.

Um das erfindungsgemäße Druckverfahren durchzuführen, ist vorgesehen, ein computerlesbares Speichermedium einzusetzen, auf dem ein Programm gespeichert ist, das es einem Datenverarbeitungssystem ermöglicht, nachdem es in Speichermittel des Datenverarbeitungssystems geladen worden ist, ein Druckverfahren durchzuführen, wobei auf einer ersten Datenverarbeitungseinrichtung ein auszudruckender Inhalt in mindestens ein vorgegebenes geräteunabhängiges Format gewandelt wird, durch die erste Datenverarbeitungseinrichtung der in das vorgegebene geräteunabhängige Format gewandelte Inhalt und Informationen über mindestens einen Drucker, auf dem der Inhalt gedruckt werden soll, an eine zweite Datenverarbeitungseinrichtung übermittelt werden, die zweite Datenverarbeitungseinrichtung ein Rendern des Inhalts veranlasst und die durch das Rendern erzeugten Daten an mindestens einen der Drucker übermittelt werden.

In einer bevorzugten Ausführungsform umfasst das auf dem computerlesbaren Speichermedium gespeicherte Computerprogramm mindestens einen Druckertreiber, der geeignet ist, ein Druckerobjekt mit zugehörigem Ausgabe-Port zu erzeugen, und das gespeicherte Computerprogramm ermöglicht dem Datenverarbeitungssystem, die Ausführung eines Druckverfahrens, wobei durch die erste Datenverarbeitungseinrichtung Drucker ermittelt werden, die von der ersten Datenverarbeitungseinrichtung über eine drahtlose Schnittstelle kommunikativ verbindbar sind, und wobei bei Auslösen unter Verwendung des Druckerobjekts eines Ausdrucks von Inhalten zumindest folgendes ausgeführt wird:
- Herstellen einer Verbindung über den Ausgabe-Port mit einer zweiten Datenverarbeitungseinrichtung und Übertragen von Informationen zumindest über durch die zweite oder - nicht beansprucht - eine dritte Datenverarbeitungseinrichtung unterstützte Drucker, an die erste Datenverarbeitungseinrichtung,
- Auswählen mindestens eines Druckers, der von der zweiten oder - nicht beansprucht - dritten

Datenverarbeitungseinrichtung unterstützt wird,
- durch den Druckertreiber Wandeln des auszudruckenden Inhalts in mindestens ein geräteunabhängiges Format,
- Übertragen des in einem geräteunabhängigen Format vorliegenden Inhalts und von Informationen über den ausgewählten Drucker über den Ausgabe-Port an die zweite Datenverarbeitungseinrichtung,
- Rendern des Inhalts auf der zweiten oder - nicht beansprucht - einer dritten Datenverarbeitungseinrichtung und
- Übertragen der durch das Rendern erzeugten Daten an mindestens einen der ausgewählten Drucker.

Die Erfindung stellt somit eine Lösung bereit, die es einem Nutzer ermöglicht, mit seinem mobilen Endgerät, auf dem nur ein Druckertreiber, der das mindestens eine vorgegebene Format erzeugen kann, installiert ist, auf einem beliebigen Drucker in seiner Umgebung zu drucken. Einzige Voraussetzung ist, dass diese Drucker auf der zweiten Datenverarbeitungseinrichtung installiert oder die entsprechenden Druckertreiber auf der zweiten Datenverarbeitungseinrichtung vorhanden sind. Dabei wird dem Endgerät (nachfolgend auch als Client bezeichnet) von der zweiten Datenverarbeitungseinrichtung eine Liste der verfügbaren Druckertreiber gesendet. Die zweite oder - nicht beansprucht - eine dritte Datenverarbeitungseinrichtung übernimmt das Rendern der auszudruckenden Daten für den gewählten Drucker.

Die Erfindung ermöglicht es einem Nutzer somit selbst dann zu drucken, wenn auf dem Endgerät des Nutzers (aus technischen oder administrativen Gründen) kein druckgerätespezifischer Druckertreiber installiert ist. Das Endgerät des Nutzers muss lediglich über mindestens ein Programm verfügen, mit dem ein auszudruckender Inhalt in das vorgegebene geräteunabhängige (generisches) Format gewandelt werden kann und Daten zu empfangen und an einen Drucker weiterzuleiten. Von einer zweiten Datenverarbeitungseinrichtung wird ein Service bereitgestellt, der das generische Format liest und es mit Hilfe der dort installierten druckgerätespezifischen Druckertreiber in ein druckgerätespezifisches Format wandelt. Bei der zweiten Datenverarbeitungseinrichtung kann es sich beispielsweise um einen Druckserver oder um einen Server eines Dienstleistungsanbieters handeln. Die zweite Datenverarbeitungseinrichtung wird daher nachfolgend auch als Server bezeichnet.

Der Ablauf des erfindungsgemäßen Verfahrens stellt sich prinzipiell wie folgt dar:
a. Der Nutzer löst am Endgerät einen Druckauftrag aus.
b. Der generische Druckertreiber erzeugt Druckdaten in einem universellen Format (z.B. EMF).
c. Beim Server wird eine Liste der Druckertreiber abgefragt.
d. Der Nutzer wählt einen Drucker aus.
e. Treibername und Druckdaten in dem universellen Format werden an den Server übertragen.
f. Der Server wandelt die Druckdaten aus dem universellen Format in ein druckerspezifisches um (Rendern).
g. Der Server schickt die Druckdaten in dem druckerspezifischen Format an den Client zurück
h. Der Client leitet die Druckdaten weiter an einen per WLAN oder Bluetooth® angeschlossenen Drucker

Bevorzugte, aber nicht beanspruchte Beispiele sehen folgendes vor:
- Der Client fragt bei jedem Druckauftrag die Druckertreiberliste vom Server ab, um eine aktuelle Liste der verfügbaren Drucker zu haben.
- Auf dem Client findet ein Abgleich der vom Server abgefragten und selbst gefundenen Treiber statt, um benutzbare Drucker zu finden.
- Zusätzlich zu Schritt c führt der Client selbst eine Suche nach Druckern durch.
- Zusätzlich zu Schritt c hat der Client eine Liste von Druckertreibern selbst erstellt, z.B. aus durch eine früher ausgeführte Suche bereits selbst gefundenen oder früher vom Server gemeldeten Druckertreibern.
- Die Schritte g und h werden nicht ausgeführt, stattdessen werden die Druckdaten in dem druckerspezifischen Format an einen Netzwerkdrucker übergeben.
- Der Server liegt in einer Cloud, dann erfolgt die Verbindung zwischen Client und Server über das Internet.
- Server und Client sind beide in einem LAN angeordnet.
- Bei drahtloser Verbindung zwischen Drucker und Client kann der Drucker entweder direkt oder über einen Access Point angesprochen werden.

Das Programmodul auf dem Client, das die Druckdaten in dem universellen Format erzeugt, liegt als unabhängiges Modul vor, das auch außerhalb des Druckvorgangs angesprochen werden kann.

Die Erfindung wird nachfolgend unter Bezugnahme auf die Figuren der Zeichnungen an einem Ausführungsbeispiel näher erläutert. Es zeigt:

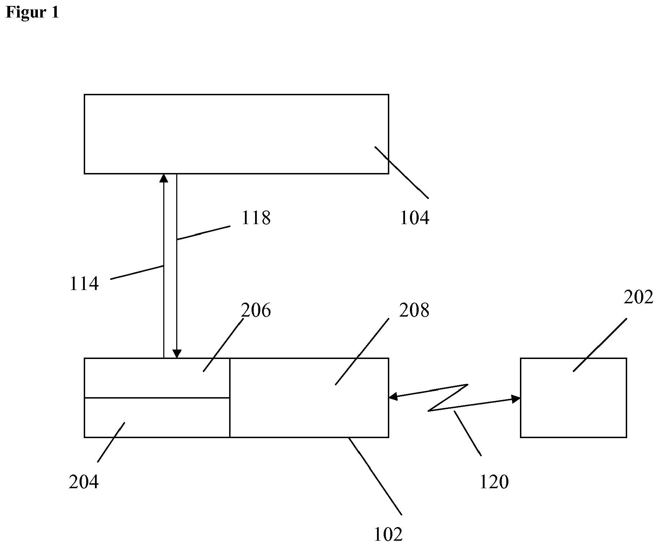

- Figur 1: eine schematische Veranschaulichung einer beispielhaften Anordnung zur Ausführung eines beispielhaften Druckverfahrens in einer Windows®-Umgebung,

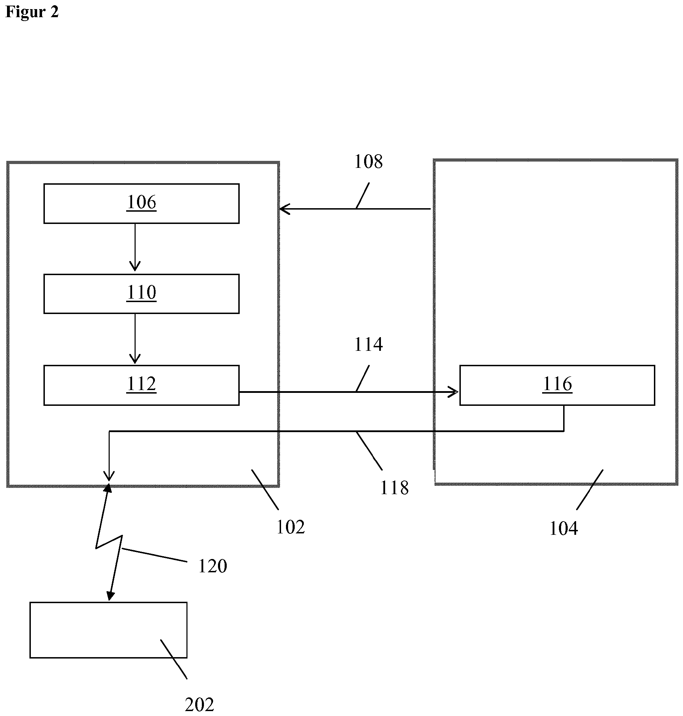

- Figur 2: eine schematische Veranschaulichung des Ablaufs von Verfahrensschritten einer beispielhaften Ausführungsform und

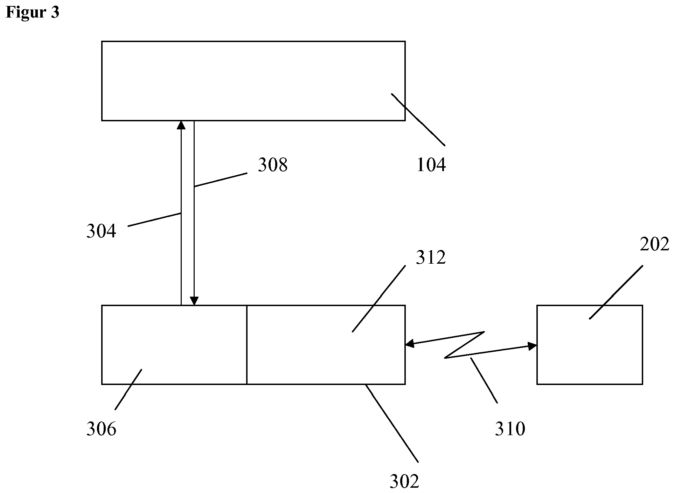

- Figur 3: eine schematische Veranschaulichung einer beispielhaften Anordnung zur Ausführung eines beispielhaften Druckverfahrens in einer auf Mac OS X basierenden Umgebung.

Im folgenden soll die Erfindung speziell am Beispiel einer Cloud-Printing-Lösung näher beschrieben werden, die es ermöglicht von einem Client, beispielsweise von einem Desktop-Rechner 102 oder Laptop, unabhängig von einer druckerspezifischen Treiberinstallation und Druckerkonfiguration auf dem Desktop-Rechner 102 über W-LAN oder Bluetooth® zu drucken.

Dabei sollen Anwender in die Lage versetzt werden, Druckaufträge von lokal auf dem Client 102 verfügbaren Dokumenten in der Cloud zu erzeugen, um die Druckdaten dann auf dem den Druck auslösenden Client wie z.B. Desktop-Rechner 102 oder Laptop wieder zu empfangen und über W-LAN oder Bluetooth® an einen lokal erreichbaren Drucker 202 zu übermitteln.

So können Anwender
- in Netzwerken, in denen sie keine Zugriffsrechte auf Drucker direkt von Ihrem Rechner aus haben und
- von Rechnern, auf denen sie keine Administrationsrechte und somit die Möglichkeit, Druckertreiber zu installieren, haben
dennoch durch Einsatz der Erfindung auf jeden beliebigen drahtlos erreichbaren Drucker 202 drucken.

Die Erfindung wird beispielhaft für sowohl für Windows® als auch für Mac OS X beschrieben.

Die Erfindung ist dabei keineswegs auf die speziellen beispielhaften Ausführungsformen eingeschränkt, sondern umfasst alle Lösungen, solange diese nur alle Merkmale der unabhängigen Ansprüche realisieren.

### Architektur beim Drucken in einer Windows®-Umgebung

Um die Erfindung einsetzen zu können, werden auf dem Desktop-Rechner 102 ein erweitertes Output-Gateway 204 zum Wandeln des auszudruckenden Inhalts in das vorgegebene, generische geräteunabhängige Format, ein Programmodul 208 zum Hinzufügen zusätzlicher Informationen, wie z.B. Informationen über den Drucker, auf dem ausgedruckt werden soll, und ein spezieller Portmonitor 206 zum Empfang und der Weitergabe von Druckdaten als Druckertreiber installiert.

Das Output-Gateway 204 stellt einen Druckerport zur Verfügung, über den der Druckvorgang abläuft.

Lokal wird dabei mittels des Output-Gateway 204 für das finale serverseitige Rendern ein spezielles geräteunabhängiges File erzeugt, das dann den auszudruckenden Inhalt umfasst und beispielsweise mit der Information zum Nutzer bzw. Workplace Account des Nutzers und zum ausgewähltem Druckermodell und Druckertyp (Druckertreiber) des entsprechenden lokal erreichbaren Druckers in Schritt 114 in die Cloud hochgeladen wird, um serverseitig in Schritt 116 aus dem Inhalt die Druckdaten für den angegebenen Drucker zu erzeugen.

Vom Server 104 werden die Druckdaten in Schritt 118 anschließend an das Output-Gateway 204 zurück übermittelt und von dort über eine drahtlose Kommunikationsverbindung 120 an den ausgewählten Drucker 202 beispielsweise via W-LAN oder Bluetooth® übermittelt. Nach erfolgreicher Übermittlung der Druckdaten können diese serverseitig wieder gelöscht werden.

### Drucken über eine private (abgeschlossene) Cloud

Beim Drucken in Verbindung mit einer privaten Cloud, also z.B. einer unternehmensinternen Cloud, erfolgt das Rendern der auszudruckenden Daten in Schritt 116 mit dem druckerspezifischen Treiber über den im Unternehmen integrierten Server 104. Die Verbindung zum Server 104 und Authorisierung des Desktop-Rechners 102 wird hierbei beispielsweise über entsprechende Informationen (Serveradresse, Nutzername und Passwort) im Output-Gateway 204 gesteuert.

Beim Druck über die private Cloud obliegt das Angebot der für das erfindungsgemäße Drucken benötigten Druckertreiber dem Unternehmen selbst.

### Drucken über eine öffentliche Cloud

In Verbindung mit einer öffentlichen Cloud erfolgt das druckerspezifische Rendern der auszudruckenden Daten in Schritt 116 beispielsweise über gehostete Server.

Die Verbindung zum Server 104 und die Autorisierung des Nutzers erfolgt hierbei beispielsweise anhand von Informationen, die in einem erweiterten Output-Gateway 204 hinterlegt sind.

Wenn ein Nutzer über die öffentliche Cloud druckt, hat er Zugriff auf eine Vielzahl unterstützter Druckermodelle, denn üblicherweise werden Dienste in der Cloud angeboten, wenn von einer Vielzahl von Nutzern ausgegangen wird. Deshalb macht eine Benutzung dieser öffentlichen Dienste nur Sinn, wenn sie ein breites Angebot an Druckertreibern enthält. Zur Nutzung des erfindungsgemäßen Druckens wird das Output-Gateway 204 entsprechend konfiguriert. Vorzugsweise erfolgen Portanlage und Druckerobjekterstellung bereits während der Installation des Output-Gateway 204.

Beispielhaft kann vorgesehen werden, dass auf dem Desktop-Rechner 102 ein spezieller Portmonitor 206 für einen HTTPS-Upload (HTTPS = HyperText Transfer Protocol Secure, sicheres Hypertext-Übertragungsprotokoll) auf den Server 104 installiert ist. In dem Output-Gateway 204 des installierten Ports kann der Nutzer Zugangsdaten zum Zugang auf den Server 104 hinterlegen. Es kann beispielsweise vorgesehen werden, dass zumindest eine E-Mail-Adresse und ein Passwort hinterlegt werden.

Nach Installation des erweiterten Output-Gateway 204 wird ein spezielles erfindungsgemäßes Druckerobjekt angelegt, das über einen zugehörigen angelegten Port druckt. Das spezielle erfindungsgemäße Druckerobjekt entspricht einem auf dem Desktop-Rechner 102 lokal installierten speziellen erfindungsgemäßen Drucker, der aus den lokalen Anwendungen wie jeder andere lokal installierte Drucker ausgewählt und angesprochen wird.

Wird für den Druck eines Dokuments der spezielle erfindungsgemäße Drucker gewählt, erfolgen in einer beispielhaften Ausführungsform folgende Schritte.

Es wird in einem ersten Schritt die Internetverbindung geprüft. Das Drucken über den speziellen erfindungsgemäßen Drucker funktioniert nur bei aktiver Internetverbindung, da diese für die Kommunikation zwischen dem Desktop-Rechner 102 oder Laptop und dem Server 104 in der privaten oder öffentlichen Cloud notwendig ist. Besteht bei Auslösen des Druckes in Schritt 106 keine Internetverbindung, wird dem Anwender eine entsprechende Meldung ausgegeben.

Nach erfolgreicher Prüfung der Internetverbindung wird die Verbindung zum Server 104, über den gedruckt werden soll, hergestellt und in Schritt 108 die Liste der verfügbaren Druckermodelle und Treiber geladen, um sie während des Druckauslösevorgangs dem Nutzer/Anwender anzubieten.

Nach Auslösen des Ausdrucks in Schritt 106 im Druckmenü des speziellen erfindungsgemäßen Druckers und bei bestehender Internetverbindung wird im nächsten Schritt abgefragt, ob über W-LAN oder Bluetooth® gedruckt werden soll. Je nach Auswahl wird dann in Schritt 110 das W-LAN nach verfügbaren Druckern durchsucht oder alle über Bluetooth® erreichbaren Geräte angezeigt. Aus der jeweiligen Liste wählt der Anwender den Drucker, auf den er drucken möchte.

Nach Auswahl eines Druckers kann der Nutzer in Schritt 112 das Druckermodell und dann den Druckertreiber über die vom Server in Schritt 108 bereitgestellte Liste auswählen. Nach Bestätigung der Auswahl werden in Schritt 114 alle Angaben zusammen mit dem zu druckenden Dokument an den Server 104 in der privaten oder öffentlichen Cloud übermittelt. In der Cloud wird dann in Schritt 116 der Druckauftrag erzeugt (gerendert) und in Schritt 118 die gerenderten Druckdaten zurück an den auslösenden Desktop-Rechner 102 und von dort über eine drahtlose Kommunikationsverbindung 120 an den ausgewählten Drucker 202 gesendet.

### Architektur beim Drucken in einer Mac-Umgebung

Vergleichbar dem Drucken in einer Windows®-Umgebung wird auf einem Desktop-Mac 302 mit dem Betriebssystem Mac OS X ein Programmodul 312 installiert, welches einem vorgegebenen, generischen geräteunabhängigen Format (im Falle von Mac OS X ein pdf-Format) zusätzliche Informationen, wie z.B. insbesondere Informationen über den Drucker, auf dem ausgedruckt werden soll, hinzufügt.

Aufgrund des unter Mac OS X verwendeten linuxbasierten Drucksystems CUPS und den sehr spezifischen Eigenheiten des Druckens unter Mac, wird in Abweichung zum Drucken in einer Windows®-Umgebung unter Mac OS X ein *.pdf-File an den Server 104 übermittelt (Schritt 304).

Ein Backend-Tool 306 auf dem Desktop-Mac 302 stellt hierfür ebenfalls einen Druckerport zur Verfügung, über den der Druckvorgang abläuft.

Lokal wird dabei für das finale serverseitige Rendern ein *.pdf-File erzeugt, das dann mit der Information zum Nutzer bzw. Workplace Account des Nutzers und ausgewähltem Druckermodell und Druckertyp (Druckertreiber) des entsprechenden lokal erreichbaren Druckers in die Cloud hochgeladen wird, um serverseitig die Druckdaten für den angegebenen Drucker zu erzeugen.

Vom Server 104 werden in Schritt 308 die Druckdaten anschließend an das Backend-Tool 306 zurück übermittelt und von dort über eine drahtlose Kommunikationsverbindung 310 an den ausgewählten Drucker 202 via W-LAN oder Bluetooth® übermittelt.

Nach erfolgreicher Übermittlung der Druckdaten können diese serverseitig wieder gelöscht werden.

Die weiteren Verfahrensschritte wie z.B. Auslösen des Druckes, Ermitteln der lokal verfügbaren Drucker, Abfrage der unterstützten Druckertreiber, Auswahl des Druckers, auf dem gedruckt werden soll, entsprechen den oben beschriebenen Schritten in einer Windows®-Umgebung analog.

## Patentansprüche

1. Druckverfahren, bei dem auf einer ersten Datenverarbeitungseinrichtung (102) mindestens ein Druckertreiber gespeichert ist, umfassend die Schritte:
- Erzeugen eines Druckerobjekts mit zugehörigem Ausgabe-Port durch den Druckertreiber, wobei das Druckerobjekt in ein Drucksystem der ersten Datenverarbeitungseinrichtung (102) integriert wird und einem Nutzer in einem Druckmenü neben herkömmlichen Druckerobjekten angeboten wird,
- Ermitteln (110) von Druckern (202), die von der ersten Datenverarbeitungseinrichtung (102) über eine drahtlose Schnittstelle (120) kommunikativ erreichbar sind, durch die erste Datenverarbeitungseinrichtung (102),
wobei bei Auslösen (106) eines Ausdrucks von Inhalten unter Verwendung des Druckerobjekts folgende weiteren Schritte ausgeführt werden:
- Herstellen einer Verbindung zwischen der ersten (102) und einer zweiten Datenverarbeitungseinrichtung (104) über den dem Druckerobjekt zugehörigen Ausgabe-Port,
- Auswählen (112) mindestens eines Druckers (202) aus einer Liste auswählbarer Drucker durch einen Nutzer an der ersten Datenverarbeitungseinrichtung (102),
wobei vor dem Auswählen des mindestens einen Druckers (202)
- Informationen zumindest über durch die zweite Datenverarbeitungseinrichtung (104) unterstützte gerätespezifische Druckertreiber zum Rendern des Inhalts von der zweiten (104) an die erste Datenverarbeitungseinrichtung (102) übertragen werden (108) und
- die Liste auswählbarer Drucker (202) diejenigen Drucker umfasst,
- für die von der zweiten Datenverarbeitungseinrichtung (104) gerätespezifische Druckertreiber unterstützt werden, und
- die drahtlos direkt oder via der zweiten Datenverarbeitungseinrichtung (104) erreichbar sind;
- Wandeln des auszudruckenden Inhalts in mindestens ein geräteunabhängiges Format durch das Druckerobjekt,
- Hinzufügen von Informationen über den ausgewählten Drucker (202) zu dem gewandelten Inhalt durch das Druckerobjekt; und
- Übertragen (114) des gewandelten Inhalts zusammen mit der hinzugefügten Information durch das Druckerobjekt von der ersten Datenverarbeitungseinrichtung (102) über den dem Druckerobjekt zugehörigen Ausgabe-Port an die zweite Datenverarbeitungseinrichtung (104),
- Rendern (116) des Inhalts auf der zweiten Datenverarbeitungseinrichtung und
- Übertragen (118) der durch das Rendern erzeugten Daten an mindestens einen der ausgewählten Drucker (202).

2. Druckverfahren nach Anspruch 1, wobei
die Informationen über durch die zweite Datenverarbeitungseinrichtung (104) unterstützten Drucker (202) zumindest Informationen über die Druckertreiber der unterstützten Drucker (202) umfassen.

3. Druckverfahren nach Anspruch 1 oder 2, wobei
die Informationen über die unterstützten Drucker (202) und/oder über die über eine drahtlose Schnittstelle (120) kommunikativ verbindbaren Drucker (202) einem Nutzer auf einer grafischen Benutzeroberfläche zur Auswahl angeboten werden.

4. Druckverfahren nach Anspruch 1 oder 2, wobei
die Informationen über die unterstützten Drucker (202) automatisch mit den Informationen über die über eine drahtlose Schnittstelle (120) kommunikativ verbindbaren Drucker (202) abgeglichen werden und automatisch die Schnittmenge der unterstützten und verbindbaren Drucker (202) gebildet wird, und zumindest ein Teil der Schnittmenge einem Nutzer zur Auswahl mindestens eines Druckers (202) angeboten wird.

5. Druckverfahren nach einem der voranstehenden Ansprüche, wobei das Druckverfahren aus einer Anwendung durch Aktivierung einer Druckfunktion gestartet wird.

6. Druckverfahren nach einem der voranstehenden Ansprüche, wobei das Druckerobjekt in das Drucksystem der ersten Datenverarbeitungseinrichtung (102) integriert ist und bei Betätigung der Druckfunktion in einer auf der ersten Datenverarbeitungseinrichtung (102) laufenden Anwendung als Drucker (202) in einem Druckmenü angeboten wird und zum Drucken auswählbar ist.

7. Druckverfahren nach einem der voranstehenden Ansprüche, wobei die durch das Rendern erzeugten Daten an die erste Datenverarbeitungseinrichtung (102) übermittelt werden und auf mindestens einem der Drucker (202) ausgedruckt werden, wobei der mindestens eine Drucker (202) mit der ersten Datenverarbeitungseinrichtung (102) kommunikativ verbunden ist.

8. Druckverfahren nach einem der voranstehenden Ansprüche, wobei die Informationen über den mindestens einen Drucker (202) Informationen über Drucker (202) umfassen, die durch die erste Datenverarbeitungseinrichtung (102) ermittelt wurden und eine drahtlose Schnittstelle (120) zur Kommunikation mit der ersten Datenverarbeitungseinrichtung (102) aufweisen.

9. Druckverfahren nach einem der voranstehenden Ansprüche, wobei Angaben über zum Rendern nutzbare Druckertreiber von der zweiten Datenverarbeitungseinrichtung (104) der ersten Datenverarbeitungseinrichtung (102) mitgeteilt werden und zumindest ein Teil der Informationen über den mindestens einen Drucker (202), auf dem der Inhalt gedruckt werden soll, diesen Angaben entnommen wird.

10. Anordnung mit mindestens einem Chip und/oder Prozessor, wobei die Anordnung derart eingerichtet ist, dass ein Druckverfahren gemäß einem der Ansprüche 1 bis 9 ausführbar ist.

11. Computerprogramm, das es einer Datenverarbeitungseinrichtung (102; 104) ermöglicht, nachdem es in Speichermittel der Datenverarbeitungseinrichtung (102; 104) geladen worden ist, ein Druckverfahren gemäß einem der Ansprüche 1 bis 9 durchzuführen.

12. Computerlesbares Speichermedium, auf dem ein Programm gespeichert ist, das es einer Datenverarbeitungseinrichtung (102; 104) ermöglicht, nachdem es in Speichermittel der Datenverarbeitungseinrichtung (102; 104) geladen worden ist, ein Druckverfahren gemäß einem der Ansprüche 1 bis 9 durchzuführen.

## Claims

1. A printing method, in which at least one printer driver is stored on a first data-processing device (102), comprising the steps:
- creating a printer object with associated output port by means of the printer driver, wherein the printer object is integrated into a printing system of the first data-processing device (102) and is offered to a user in a print menu alongside conventional printer objects,
- identifying (110) printers (202), which can be reached communicatively by the first data-processing device (102) via a wireless interface (120), by means of the first data-processing device (102),
wherein, when the printing of content is triggered (106) using the printer object, the following further steps are executed:
- producing a connection between the first (102) and a second data-processing device (104) via the output port associated with the printer object,
- selection (112) of at least one printer (202) from a list of selectable printers by a user at the first data-processing device (102),
wherein prior to the selection of the at least one printer (202)
- information at least about device-specific printer drivers supported by the second data-processing device (104) for rendering the content is transmitted (108) from the second (104) to the first data-processing device (102), and
- the list of selectable printers (202) comprises the printers,
- for which device-specific printer drivers are supported by the second data-processing device (104), and
- which can be reached wirelessly directly or via the second data-processing device (104);
- converting the content to be printed to at least one device-independent format by means of the printer object,
- adding information about the selected printer (202) to the converted content by means of the printer object; and
- transmitting (114) the converted content together with the added information by means of the printer object from the first data-processing device (102), via the output port associated with the printer object, to the second data-processing device (104),
- rendering (116) the content on the second data-processing device, and
- transmitting (118) the data generated by the rendering to at least one of the selected printers (202).

2. The printing method according to Claim 1, wherein the information about printers (202) supported by the second data-processing device (104) at least comprises information about the printer drivers of the supported printers (202).

3. The printing method according to Claim 1 or 2, wherein
the information about the supported printers (202) and/or about the printers (202), which can be connected communicatively via a wireless interface (120), is offered to a user for selection on a graphical user interface.

4. The printing method according to Claim 1 or 2, wherein
the information about the supported printers (202) is automatically compared with the information about a printer (202), which can be connected via a wireless interface (120), and the intersection of the supported and connectable printers (202) is formed, and at least part of the intersection is offered to a user for the selection of at least one printer (202).

5. The printing method according to one of the preceding claims, wherein
the printing method is started from an application by activating a print function.

6. The printing method according to one of the preceding claims, wherein
the printer object is integrated into the printing system of the first data-processing device (102) and, when the print function is actuated, is offered in a print menu as a printer (202) in an application running on the first data-processing device (102) and can be selected for printing.

7. The printing method according to one of the preceding claims, wherein
the data created by the rendering are transmitted to the first data-processing device (102) and printed on at least one of the printers (202), wherein the at least one printer (202) is communicatively connected to the first data-processing device (102).

8. The printing method according to one of the preceding claims, wherein
the information about the at least one printer (202) comprises information about printers (202), which were identified by means of the first data-processing device (102) and have a wireless interface (120) for communication with the first data-processing device (102) .

9. The printing method according to one of the preceding claims, wherein
details about printer drivers, which can be used for rendering, are shared by the second data-processing device (104) with the first data-processing device (102) and at least part of the information about the at least one printer (202), on which the content should be printed, is drawn from these details.

10. An arrangement having at least one chip and/or processor, wherein
the arrangement is set up in such a manner that a printing method according to one of Claims 1 to 9 can be executed.

11. A computer program which, after it has been loaded in storage means of a data-processing device (102; 104), enables the data-processing device (102; 104) to carry out a printing method according to one of Claims 1 to 9.

12. A computer-readable storage medium, on which a program is stored, which, after it has been loaded in storage means of a data-processing device (102; 104), enables the data-processing device (102; 104) to carry out a printing method according to one of Claims 1 to 9.

## Revendications

1. Procédé d'impression, dans lequel au moins un pilote d'impression est mémorisé sur un premier dispositif de traitement de données (102), comprenant les étapes consistant à :
- générer un objet d'impression avec un port de sortie afférent par l'intermédiaire du pilote d'impression, dans lequel l'objet d'impression est intégré dans un système d'impression du premier dispositif de traitement de données (102) et est proposé à un utilisateur dans un menu d'impression à côté des objets d'impression conventionnels,
- déterminer (110) des imprimantes (202) par l'intermédiaire du premier dispositif de traitement de données (102), qui peuvent être atteintes en communication par le premier dispositif de traitement de données (102) par l'intermédiaire d'une interface sans fil (120),
dans lequel lors du déclenchement (106) d'une impression de contenu en utilisant l'objet d'impression les étapes supplémentaires suivantes sont exécutées :
- établir une liaison entre le premier (102) et un deuxième dispositif de traitement de données (104) par l'intermédiaire du port de sortie afférent à l'objet d'impression,
- sélectionner (112) au moins une imprimante (202) dans une liste d'imprimantes pouvant être sélectionnés par un utilisateur sur le premier dispositif de traitement de données (102),
dans lequel avant de sélectionner au moins une imprimante (202),
- les informations sont transmises (108) au moins par l'intermédiaire du pilote d'imprimante spécifique à l'appareil assisté par le deuxième dispositif de traitement de données (104) afin de restituer le contenu du deuxième dispositif de traitement de données (104) au premier dispositif de traitement de données (102) et
- la liste d'imprimantes pouvant être sélectionnées (202) comprend lesdites imprimantes,
- pour lesquelles les pilotes d'imprimante spécifiques aux appareils (104) sont assistés par le deuxième dispositif de traitement de données (104) et
- qui peuvent être atteintes sans fil directement ou via le deuxième dispositif de traitement de données (104) ;
- convertir le contenu imprimé en au moins un format indépendant de l'appareil par l'objet d'impression,
- ajouter des informations relatives à l'imprimante sélectionnée (202) au contenu converti par l'objet d'impression ; et
- transmettre (114) le contenu converti conjointement à l'information ajoutée par l'intermédiaire de l'objet d'impression à partir du premier dispositif de traitement de données (102) par l'intermédiaire du port de sortie afférent à l'objet d'impression au deuxième dispositif de traitement de données (104),
- restituer (116) le contenu sur le deuxième dispositif de traitement de données et
- transmettre (118) les données générées par la restitution à au moins une des imprimantes sélectionnées (202).

2. Procédé d'impression selon la revendication 1, dans lequel
les informations relatives aux imprimantes (202) assistées par le deuxième dispositif de traitement de données (104) comprennent au moins des informations relatives au pilote d'imprimante de l'imprimante (202) assistée.

3. Procédé d'impression selon la revendication 1 ou 2, dans lequel
les informations relatives aux imprimantes assistées (202) et/ou ou aux imprimantes (202) pouvant être reliées en communication par l'intermédiaire d'une interface sans fil (120) sont proposés à un utilisateur sur une surface d'utilisateur graphique en vue d'une sélection.

4. Procédé d'impression selon la revendication 1 ou 2, dans lequel
les informations relatives aux imprimantes assistées (202) sont comparées automatiquement avec les informations relatives à l'imprimante (202) pouvant être reliées en communication par l'intermédiaire d'une interface sans fil (120) et le recoupement des imprimantes assistées et pouvant être reliées (202) est automatiquement formé, et au moins une partie du recoupement est proposée à un utilisateur en vue de la sélection d'au moins une imprimante (202).

5. Procédé d'impression selon une des revendications précédentes, dans lequel le procédé d'impression est démarré à partir d'une application par l'activation d'une fonction d'impression.

6. Procédé d'impression selon une des revendications précédentes, dans lequel l'objet d'impression est intégré dans le système d'impression du premier dispositif de traitement de données (102) et lors de l'action de la fonction d'impression dans une application s'exécutant sur le premier dispositif de traitement de données (102) est proposé comme imprimante (202) dans un menu d'impression et peut être sélectionné en vue d'une impression.

7. Procédé d'impression selon une des revendications précédentes, dans lequel les données générées par la restitution sont transmises au premier dispositif de traitement de données (102) et sont imprimées sur au moins une des imprimantes (202), dans lequel au moins une imprimante (202) est reliée en communication avec le premier dispositif de traitement de données (102).

8. Procédé d'impression selon une des revendications précédentes, dans lequel les informations relatives à au moins une imprimante (202) comprennent des informations relatives aux imprimantes (202), qui ont été déterminées par le premier dispositif de traitement de données (102) et présentent une interface sans fil (120) en vue de la communication avec le premier dispositif de traitement de données (102) .

9. Procédé d'impression selon une des revendications précédentes, dans lequel les indications relatives aux pilotes d'imprimante utilisables pour la restitution sont communiquées au premier dispositif de traitement de données (102) par le deuxième dispositif de traitement de données (104) et au moins une partie des informations relatives à au moins une imprimante (202), sur laquelle le contenu doit être imprimé, sont extraites de ces indications.

10. Dispositif comportant au moins une puce et/ou un processeur, dans lequel le dispositif est configuré de telle sorte qu'un procédé d'impression selon une des revendications 1 à 9 puisse être exécuté.

11. Programme informatique, qui permet à un dispositif de traitement de données (102 ;104), après qu'il a été chargé dans un moyen de mémoire du dispositif de traitement de données (102 ;104), de mettre en oeuvre un procédé d'impression selon une des revendications 1 à 9.

12. Support de mémorisation lisible par ordinateur, sur lequel un programme est mémorisé, qui permet à un dispositif de traitement de données (102 ;104), après qu'il a été chargé dans un moyen de mémoire du dispositif de traitement de données (102 ;104), de mettre en oeuvre un procédé d'impression selon une des revendications 1 à 9.
